# DEMANDE DE BREVET EUROPEEN

(11) **EP 2 322 586 A1**
(43) Date de publication de la demande: **18.05.2011**
(21) Numéro de dépôt: 10010929.7
(22) Date de dépôt: 07.11.2006
(51) Int. Cl.: C09K 8/32

(54) **Fluide de puits comprenant une phase liquide fluorée**

(30) Priorité: 18.11.2005 FR 0511694
(62) Demande divisionnaire de: 06291745.5
(71) Demandeur: IFP Energies nouvelles, 92852 Rueil-Malmaison Cedex (FR)
(72) Inventeur: Pasquier, David, 69006 Lyon (FR); Driancourt, Alain, 94240 L'Hay-les-Roses (FR); Audibert, Annie, 78290 Croissy-sur-Seine (FR)

(57) **Abrégé**

La présente invention concerne un fluide de forage, de conditionnement, ou d'intervention dans un puits, dans lequel la phase continue du fluide est constituée principalement par un composé fluoré liquide.

Dans une variante, le composé fluoré liquide est un composé perfluoré.

## Description

La présente invention concerne un fluide de composition optimisée pour résoudre les problèmes rencontrés au cours d'opérations, telles que le forage, le conditionnement ou l'intervention dans un puits.

Par conditionnement, il faut comprendre ce qui est communément appelé "complétion", c'est-à-dire les opérations de préparation ou d'équipement nécessaires à la mise en production d'une formation géologique à partir du puits foré. Ces opérations dites de "complétion" mettent en oeuvre des fluides particuliers appelés "fluides de complétion".

Par interventions, il faut comprendre les opérations effectuées dans un puits producteur ou potentiellement producteur. Ces opérations sont communément appelées "work-over". Les fluides de "work-over" peuvent être mis en oeuvre dans le puits producteur en circulation de façon comparable à des fluides de forage, ou sous forme de fluide tampon ou "spacer".

Tous ces fluides, de forage, de conditionnement ou d'intervention ont notamment en commun l'adaptation physico-chimique de leur formulation à la nature des formations géologiques avec lesquelles ils sont en contact et aux fonctions principales auxquelles ils sont voués. En effet, il est connu que les fluides mis en oeuvre dans un puits ont généralement la plupart des fonctions suivantes :
- maintien de la stabilité des parois du puits,
- filtration contrôlée dans les formations perméables,
- bonne capacité de nettoyage du fond du puits en circulation,
- réglage aisé de la masse volumique,
- stabilité en température et dans le temps,
- pas ou peu de contamination par les argiles ou les électrolytes,
- fabrication et traitement aisés, etc....

Pour réaliser ces fonctions combinées complexes, qui peuvent être incompatibles, il faut choisir et régler les quantités relatives d'additifs adaptés aux fonctions désirées dans le contexte des contraintes du puits. Pour cela, selon la nature des problèmes de formations géologiques rencontrées, de leurs conditions de fond, telles pression et température, et selon les fonctions principales indispensables au fluide, la composition du fluide de puits est généralement le résultat d'un compromis entre plusieurs fonctions et le coût des additifs indispensables.

Les problèmes essentiels rencontrés lors de l'utilisation de fluides dans des conditions HP/HT (haute pression/haute température) résultent principalement des deux contraintes suivantes: - une masse volumique de fluide de puits supérieure à 2000 kg/m³ est requise afin d'équilibrer la pression de fond aux grandes profondeurs de puits, - les températures statiques de fond sont très souvent supérieures à 200°C et pouvant parfois atteindre, ou dépasser, 300°C.

Les techniques de forage habituellement employées dans des conditions moins drastiques (réservoir moins profond et/ou température inférieure ou égale à 200°C) utilisent des fluides à base d'eau ou des fluides à base d'huile. Dans ce dernier cas, la phase continue est généralement constituée d'un hydrocarbure, de type diesel ou isoparaffine. La masse volumique du fluide est alors ajustée par l'ajout de sels denses, solubles en phase aqueuse (chlorure de baryum, formiates alcalins...), mais également par l'ajout de charges minérales dispersées dans la phase continue. La stabilité de la dispersion est généralement assurée par différents types d'agents suspensifs, fluidifiants, agents mouillants, polymères.

Les fluides actuellement connus sont mal adaptés aux conditions HP/HT, en particulier au-delà de 220°C. Le problème majeur des boues actuelles en HP/HT se situe donc au moment de l'arrêt du forage. Après un temps prolongé en fond de puits, apparaît un phénomène fortement marqué de sédimentation des particules, notamment d'alourdissant. Dans certains cas, il se forme un amas solide impossible à remettre en circulation. Le puits est alors bouché.

Ce phénomène est lié à la forte concentration de charges minérales dans la formulation du fluide, nécessaire pour densifier la boue et à l'accélération de la sédimentation du fait de la perte des propriétés rhéologiques du fluide. La perte des propriétés rhéologiques est notamment due à la dégradation thermique des différents additifs composant la boue, notamment les agents suspensifs (tels que les argiles, les polymères, les tensioactifs). Concernant le durcissement du dépôt, une gélification des argiles sous l'effet de la température est probablement en cause.

Pour les fluides à base d'eau, des polymères hydrosolubles sont utilisés comme viscosifiant de la phase continue. Ils sont de type polysaccharide, comme des dérivés de xanthane ou autres, ou des polymères synthétiques, copolymères ou terpolymères vinyliques, à base d'acrylamide et comprenant au moins l'une des unités monomères suivantes : acrylate, acrylamidométhyl propane sulfonate (AMPS), itaconate, styrène sulfonate. La température limite d'utilisation de ce type de polymère dépasse rarement les 200°C. On peut citer en référence le document de Y.M. Wu, B, Q. Zhang, T. Wu, C. G. Zhang: Colloïd Polym. Science 27 (9) 836-84 (2001); A. Audibert, L. Rousseau, J. Kieffer, SPE 50724, (1999); Y.M. Wu, D.J. Sun, B.Q. Zhang, CH. G. Zhang: J.Appl.Polym.Sci., 83, 3068-3075 (2002).

Les charges minérales peuvent aussi être mises en suspension en ajoutant à la formulation des polymères dispersants, qui eux aussi sont limités à une gamme similaire de température.

Dans le cas des fluides non aqueux, notamment les fluides comportant des isoparaffines comme phase continue, la formulation est plus complexe. Ce sont des émulsions inverses eau dans huile dont la masse volumique de la phase continue est d'environ 900 kg/m³. Lorsque la masse volumique du fluide est nécessairement importante (masse volumique supérieure ou égale à 2000 kg/m³), la fraction volumique de charges incorporées dans le fluide peut dépasser 35%. La stabilité de ces formulations est liée à la stabilité des émulsions à haute température et là aussi, il est très difficile de formuler des fluides stables à des températures supérieures à 220°C. Le risque encouru est alors une séparation de phases qui entraîne une dégradation des propriétés rhéologiques, l'envahissement des formations et la sédimentation des agents alourdissant (P.D. Scott, M. Zamora, C. Aldea, IADC l SPE Drilling Conference, 2-4 March, Dallas, Tex*as -* D.J. Oakley, et al. IADC/SPE Asia Pacific Drilling Technology, 11-13 September, Kuala Lumpur, Malaysia). Les dépôts peuvent être très abondants et gélifient après quelques dizaines d'heures sous l'effet de la température.

La présente invention concerne les fluides de puits comportant des liquides denses et stables à haute température, constituants principaux de la phase continue. L'invention concerne plus particulièrement des fluides de puits dont la phase continue comporte un liquide fluoré, dense et stable à haute température. Le domaine d'application préférentiel de ces fluides se situe dans les conditions de haute pression et de haute température, généralement rencontrées lors de forage, ou d'exploitation, de réservoirs géologiques très enfouis, c'est-à-dire au-delà de 3000 m, et généralement plus de 5000 m de profondeur.

Ainsi, l'objet de la présente invention consiste à utiliser un composé fluoré liquide comme constituant principal de la phase continue des fluides de puits pour au moins deux propriétés primordiales de ces produits : - leur forte masse volumique et - leur tenue en température. Les composés liquides fluorés concernés par l'invention peuvent contenir ou non d'autres groupements fonctionnels, par exemple: d'autres groupements halogénés autres que fluorés, ou hydrocarbonés. Le fluide de puits selon l'invention peut contenir plus spécifiquement des liquides perfluorés comme liquide fluoré, et plus spécifiquement la famille des perfluoropolyalkyléthers et leurs dérivés.

La famille des perfluoropolyalkyléthers (également nommés perfluoro polyéthers ou PFPE) est notamment une variante avantageuse. Les PFPE sont une classe unique de polymères fluorés qui sont liquides à température ambiante et présentent des caractéristiques particulières telles qu'une faible énergie interfaciale, un fort pouvoir lubrifiant, une résistance thermique et chimique très importante et une faible toxicité. Des masses volumiques de 1800 kg/m³ à 2000 kg/m³ et des stabilités thermiques supérieures à 300°C sont obtenues. Ainsi, les perfluoropolyalkyléthers (n° CAS : 60164-51-4) sont des produits commerciaux et sont généralement utilisés comme lubrifiants, comme fluide caloporteur, comme fluide hydraulique pour l'aérospatiale, comme isolant électrique en électronique. La synthèse des PFPE est décrite dans l'article suivant : W. C. Bunyard et al. , Macromolecules, 32, 8224 (1999).

On peut citer comme liquide PFPE, le Krytox^{®} de la société Dupont, Fomblin^{®} de la société Solvay Solexis, Demnum^{®} de la société Daikin.

Les composés liquides concernés par l'invention peuvent avoir les caractéristiques suivantes:
- la masse volumique du liquide en question, mesurée à 20°C peut être comprise ente 1800 et 2200 kg/m³ ;
- la température d'utilisation maximale de ces liquides peut être comprise entre 220°C et 400°C ;
- une viscosité cinématique mesurée à 20°C comprise entre 10 et 10000 cSt, et plus particulièrement entre 10 et 2000 cSt. Leur masse molaire peut être comprise entre 1000 et 30000 g/mol, et préférentiellement entre 1000 à 10000 g/mol.

Le composé perfluoropolyéther selon l'invention, a au moins l'une des structures suivantes, ou leurs mélanges :
(a) E-O-(CF(CF₃)CF₂O)ₘ(CFXO)ₙ-E'
   où X est égal à F ou à CF₃;
   E et E', égaux ou différents l'un de l'autre, sont CF₃, C₂F₅, ou C₃F₇;
   m et n sont des nombres entiers tels que rapport du m/n est compris entre 20 et 1000 et la viscosité du produit est dans la gamme 10 et 4000 cSt;
(b) C₃F₇O-(CF(CF₃)CF₂O)ₒ-D
   où D est égal à C₂F₅ ou à C₃F₇; o est un nombre entier tel que la viscosité est dans la gamme
   de la structure (a);
(c) {C₃F₇O-(CF(CF₃)CF₂O)ₚ-CF(CF₃)-}₂
   où p est un nombre entier tels que la viscosité est dans la gamme de la structure (a);
(d) E-O-(CF(CF₃)CF₂O)_{q} (C₂F₄O)ᵣ (CFX)ₛ-E'
   où X, E et E' selon la structure (a);
   q, r et s sont des nombres entiers, ou nul, et tels que la viscosité est dans la gamme de la structure (a);
(e) E-O-(C₂F₄O)ₜ (CF₂O)ᵤ-E'
   où E et E', selon la structure (a);
   t et u sont des nombres entiers tels que rapport t/u est compris entre 0,1 et 5 et la viscosité est dans la gamme de la structure (a);
(f) E-O-(CF₂CF₂CF₂O)ᵥ-E'
   où E et E 'selon la structure (a); v est un nombre tel que la viscosité est dans la gamme de la structure (a);
(g) D-O-(CF₂CF₂O)_{z}-D'
   où D et D', égaux ou différents l'un de l'autre, sont C₂F₅ ou C₃F₇;
   z est un nombre entier tels que la viscosité est dans la gamme de la structure (a).

Selon l'invention, on optimise également une formulation de fluide de puits comprenant lesdits composés liquides fluorés dans le but de stabiliser la suspension des charges solides avec des émulsifiants et/ou des modificateurs de rhéologie. Le fluide de puits est adapté pour supporter une venue massive de saumure provenant de la roche réservoir et pour cela, est avantageusement formulé sous forme d'une émulsion inverse eau dans une phase continue comprenant le liquide fluoré. Cette émulsion inverse peut également contenir d'autres phases liquides, par exemple organiques, ce qui permet d'assurer la stabilité de la formulation en cas de venues d'hydrocarbures. L'émulsion peut contenir de 5 à 40% en volume d'une phase aqueuse de saumure dispersée. Les saumures peuvent être de chlorures de sodium, potassium, calcium, de carbonates de sodium, potassium, ou de formiates alcalins. Le fluide de puits peut contenir un mélange de fluide aqueux et de liquide hydrocarboné en émulsion dans le liquide fluoré.

On utilise des tensioactifs, non seulement pour stabiliser l'émulsion, mais aussi pour disperser les charges minérales (alourdissant, et éventuellement argiles, ou argiles organophiles), et pour ainsi contrôler les propriétés rhéologiques du fluide, en particulier la thixotropie. Le système émulsifiant utilisé permet d'obtenir une stabilité de l'émulsion sur une large gamme de température.

Les agents tensioactifs utilisés ici sont sélectionnés de façon à être compatibles avec la phase continue, en particulier de part la nature chimique fluorée de cette phase. Les documents US-5368847, US-4990283, US-20040086650 décrivent des tensioactifs fluorés pour différents types de formulation.

Les agents tensioactifs décrits ci-après sont appropriés pour être compatibles (c'est-à-dire solubles ou dispersibles) avec le perfluoropolyéther.

Les tensioactifs utiles pour l'application affectent une ou plusieurs des propriétés suivantes : tension superficielle, capacité de mouillage des particules solides et notamment celles de l'alourdissant utilisé (barytine, carbonates, ou autres), et/ou HLB de la composition. En utilisant des mélanges de tensioactifs, il est également possible de stabiliser des systèmes multiphasiques composés d'au moins une phase liquide perfluorée, et au moins l'une des phases suivantes : phase solide, phase aqueuse, phase huile hydrocarbonée.

Les agents tensioactifs fluorés formant l'objet de la présente invention peuvent être ioniques ou non ioniques. En particulier, on peut citer:
(a) les acides perfluorocarboxyliques contenant 5 à 11 atomes de carbone, et leurs sels ;
(b) les acides perfluorosulphoniques contenant 5 à 11 atomes de carbone, et leurs sels ;
(c) les perfluorophosphates contenant 5 à 11 atomes de carbone ;
(d) les agents tensioactifs non ioniques tels que les composés répondant à la formule générale Rf(CH₂)(OC₂H₄)ₙ OH, dans laquelle Rf est une chaîne perfluorocarbonée ou fluorocarbonée partiellement hydrogénée, n est un nombre entier au moins égal à 1 ;
(e) les agents tensioactifs non ioniques fluorés de type polyoxyéthylène-fluoroalkyléther ;
(f) les acides mono et dicarboxyliques dérivant des perfluoro polyéthers, et leurs sels ;
(g) les acides mono et disulfoniques dérivant des perfluoro polyéthers, et leurs sels ;
(h) les perfluoro polyéther phosphates, les perfluoro polyéther diphosphates, particulièrement efficaces pour la dispersion des charges minérales ;
(i) les agents tensioactifs cationiques ou anioniques perfluorés ou ceux dérivants des perfluoro polyéthers ayant 1, 2 ou 3 chaînes hydrophobes latérales ;
(j) les fluoroalcools éthoxylés, les sulfonamides fluorées ou les carboxamides fluorées.

Les formulations sont constituées en fonction de la masse volumique finale du fluide à utiliser, en fonction de la masse volumique de l'alourdissant, en fonction de la fraction massique et de la masse volumique de saumure.

Les deux tableaux ci-après montrent des exemples de formulations, nullement limitatifs, basés sur l'obtention d'un fluide de puits de masse volumique, mesurée à 20°C, de 2200 kg/m³.

Pour un PFPE, avec de la barytine et une saumure de type CaCl₂ saturée : tableau 1 (pour 1 m³ de fluide)

| Fraction massique eau | Masse Liquide Fluoré | Masse Barytine | Masse Saumure | Fractions volumiques | | |
|---|---|---|---|---|---|---|
| | | | | Liquide Fluoré | Barytine | Saumure |
| | kg | kg | kg | | | |
| 0,00 | 1679 | 520,9 | 0,0 | 88% | 12% | 0% |
| 0,05 | 1501 | 589,1 | 110,0 | 79% | 13% | 8% |
| 0,10 | 1323 | 657,4 | 220,0 | 70% | 15% | 16% |
| 0,15 | 1144 | 725,6 | 330,0 | 60% | 16% | 24% |
| 0,20 | 966 | 793,8 | 440,0 | 51% | 18% | 31% |
| 0,25 | 788 | 862,0 | 550,0 | 41% | 19% | 39% |
| 0,30 | 610 | 930,2 | 660,0 | 32% | 21% | 47% |
| 0,35 | 432 | 998,4 | 770,0 | 23% | 22% | 55% |
| 0,40 | 253 | 1066,7 | 880,0 | 13% | 24% | 63% |

Pour un PFPE, avec du carbonate de calcium et une saumure de type CaCl₂ saturée : tableau 2 (pour 1 m³ de fluide).

| Fraction massique eau | Masse Liquide Fluoré | Masse Carbonate de calcium | Masse Saumure | Fractions volumiques | | |
|---|---|---|---|---|---|---|
| | | | | Liquide Fluoré | Carbonate de calcium | Saumure |
| | kg | kg | kg | | | |
| 0,00 | 1347 | 853,4 | 0,0 | 71% | 29% | 0% |
| 0,05 | 1125 | 965,2 | 110,0 | 59% | 33% | 8% |
| 0,10 | 903 | 1076,9 | 220,0 | 48% | 37% | 16% |
| 0,15 | 681 | 1188,7 | 330,0 | 36% | 41% | 24% |
| 0,20 | 460 | 1300,4 | 440,0 | 24% | 44% | 31% |
| 0,22 | 371 | 1345,1 | 484,0 | 20% | 46% | 35% |

Ces exemples de formulations pour un fluide dense montrent que l'utilisation de PFPE permet de limiter la quantité d'alourdissant. Il est clair que dans les cas conventionnels de fluide à base d'eau ou d'huile, la fraction volumique d'alourdissant est obligatoirement plus grande pour atteindre la même masse volumique.

## Revendications

1. Fluide de puits multiphasique, **caractérisé en ce que** la phase continue dudit fluide comporte un composé fluoré liquide comme constituant principal.

2. Fluide selon la revendication 1, dans lequel ledit composé est un composé perfluoré.

3. Fluide selon l'une des revendications 1 ou 2, dans lequel ledit composé comprend au moins un groupement perfluoré et au moins un groupement halogéné autre que fluor ou hydrocarboné.

4. Fluide selon l'une des revendications 1 à 3, dans lequel ledit composé comprend un perfluoropolyéther.

5. Fluide selon l'une des revendications précédentes, dans lequel ledit composé a une masse volumique déterminée à 20°C comprise entre 1800 et 2200 kg/m³, une viscosité cinématique déterminée à 20°C comprise entre 10 et 10000 cSt, et une masse moléculaire comprise entre 1000 et 30000 g/mol.

6. Fluide selon la revendication 5, dans lequel ledit composé est un perfluoropolyéther comportant au moins l'une des structures suivantes, ou leurs mélanges :
(a) E-O-CCF(CF₃)CF₂O)ₘ(CFXO)ₙ-E'
où X est égal à F ou à CF₃;
E et E', égaux ou différents l'un de l'autre, sont CF₃, C₂F₅ , ou C₃F₇;
m et n sont des nombres entiers tels que le rapport du m/n est compris entre 20 et 1000 et la viscosité cinématique de la structure (a) est dans la gamme 10 et 4000 cSt;
(b) C₃F₇O-(CF(CF₃)CF₂O)ₒ-D
où D est égal à C₂F₅ ou à C₃F₇ ;
o est un nombre entier tel que la viscosité cinématique de la structure (b) est dans la gamme 10 et 4000 cSt;
(c) {C₃F₇O-(CF(CF₃)CF₂O)ₚ-CF(CF₃)-}₂
où p est un nombre entier tel que la viscosité cinématique de la structure (c) est dans la gamme 10 et 4000 cSt;
(d) E-O-(CF(CF₃)CF₂O)_{q} (C₂F₄O)ᵣ (CFX)ₛ-E' où X est égal à F ou à CF₃;
E et E', égaux ou différents l'un de l'autre, sont CF₃, C₂F₅ , ou C₃F₇; q, r et s sont des nombres entiers, ou nul, et tels que la viscosité cinématique de la structure (d) est dans la gamme 10 et 4000 cSt;
(e) E-O-(C₂F₄O)ₜ (CF₂O)ᵤ-E'
où E et E', égaux ou différents l'un de l'autre, sont CF₃, C₂F₅, ou C₃F₇;
t et u sont des nombres entiers tels que le rapport t/u est compris entre 0,1 et 5 et la viscosité cinématique de la structure (e) est dans la gamme 10 et 4000 cSt;
(f) E-O-(CF₂CF₂CF₂O)ᵥ-E'
où E et E', égaux ou différents l'un de l'autre, sont CF₃, C₂F₅, ou C₃F₇;
v est un nombre tel que la viscosité cinématique de la structure (f) est dans la gamme 10 et 4000 cSt;
(g) D-O-(CF₂CF₂O)_{z}-D'
où D et D', égaux ou différents l'un de l'autre, sont C₂F₅ ou C₃F₇;
z est un nombre entier tel que la viscosité cinématique de la structure (g) est dans la gamme 10 et 4000 cSt;

7. Fluide selon l'une des revendications précédentes, comportant au moins un tensioactif, ou un de leurs mélanges, choisi dans le groupe suivant:
(a) les acides perfluorocarboxyliques contenant 5 à 11 atomes de carbone, et leurs sels ;
(b) les acides perfluorosulphoniques contenant 5 à 11 atomes de carbone, et leurs sels ;
(c) les perfluorophosphates contenant 5 à 11 atomes de carbone;
(d) les agents tensioactifs non ioniques tels que les composés répondant à la formule générale Rf(CH₂)(OC₂H₄)ₙOH, dans laquelle Rf est une chaîne perfluorocarbonée ou fluorocarbonée partiellement hydrogénée, n est un nombre entier au moins égal à 1 ;
(e) les agents tensioactifs non ioniques fluorés de type polyoxyéthylène-fluoroalkyléther ;
(f) les acides mono et dicarboxyliques dérivant des perfluoro polyéthers, et leurs sels ;
(g) les acides mono et disulfoniques dérivant des perfluoro polyéthers, et leurs sels ;
(h) les perfluoro polyéther phosphates, les perfluoro polyéther diphosphates ;
(i) les agents tensioactifs cationiques ou anioniques perfluorés ou ceux dérivants des perfluoro polyéthers ayant 1, 2 ou 3 chaînes hydrophobes latérales ;
(j) les fluoroalcools éthoxylés, les sulfonamides fluorées ou les carboxamides fluorées.

8. Fluide selon l'une des revendications précédentes, comportant une quantité déterminée de charges inertes alourdissantes pour ajuster sa masse volumique.

9. Fluide selon la revendication 8, dans lequel lesdites charges inertes sont dispersées par l'adjonction de un ou plusieurs agents tensioactifs selon la revendication 9.

10. Fluide selon l'une des revendications précédentes, comportant une quantité d'un fluide aqueux en émulsion eau dans ledit composé liquide.

11. Fluide selon la revendication 10, dans lequel ledit fluide aqueux est une saumure de chlorures de sodium, potassium, calcium, de carbonates de sodium, potassium, ou de formiates alcalins.

12. Fluide selon l'une des revendications 10 ou 11, dans lequel ladite émulsion est stabilisée par l'adjonction d'un ou de plusieurs agents tensioactifs selon la revendication 9.

13. Fluide selon l'une des revendications précédentes, comportant une quantité d'un liquide hydrocarboné en émulsion eau dans ledit composé liquide.

14. Fluide selon l'une des revendications 10 à 13, comportant un fluide aqueux et un liquide hydrocarboné en émulsion dans ledit composé liquide.

15. Fluide selon l'une quelconque des précédentes revendications, ledit fluide de puits étant un fluide de forage ou un fluide de conditionnement ou un fluide d'intervention.

16. Utilisation d'un fluide selon l'une des revendications 1 à 15 pour le forage, le conditionnement ou l'intervention dans un puits.

17. Utilisation d'un fluide selon la revendication 16 pour le forage d'un réservoir imposant une masse volumique du fluide mesurée à 20°C supérieure à 2000 kg/m3, à une température statique de fond supérieure à 200°C.
